# EUROPÄISCHE PATENTSCHRIFT

(11) **EP 4 185 436 B1**
(45) Veröffentlichungstag und Bekanntmachung des Hinweises auf die Patenterteilung: **18.06.2025**
(21) Anmeldenummer: 21742417.5
(22) Anmeldetag: 14.07.2021
(51) Int. Cl.: B23K 26/32

(54) **LASERSCHWEISSVERFAHREN ZUM FÜGEN EINES NICHT-SINTERMATERIALS MIT EINEM SINTERMATERIAL UND DERARTIG HERGESTELLTER VERBUNDKÖRPER**
LASER WELDING METHOD FOR JOINING A NON-SINTERED MATERIAL TO A SINTERED MATERIAL, AND COMPOSITE BODY PRODUCED IN THIS WAY
PROCÉDÉ DE SOUDAGE LASER POUR ASSEMBLER UN MATÉRIAU NON FRITTÉ ET UN MATÉRIAU FRITTÉ, CORPS COMPOSITE ET UTILISATION D'UN PROCÉDÉ DE SOUDAGE LASER

(30) Priorität: 21.07.2020 DE 102020119091
(43) Veröffentlichungstag der Anmeldung: 31.05.2023
(73) Patentinhaber: ECO Holding 1 GmbH, 97828 Marktheidenfeld (DE)
(72) Erfinder: FRIEDRICH, Arne, 97828 Marktheidenfeld (DE)
(74) Vertreter: Keller Schneider Patentanwaltsgesellschaft mbH
(86) Internationale Anmeldenummer: PCT/EP2021/069611
(87) Internationale Veröffentlichungsnummer: WO 2022/017886

(56) Entgegenhaltungen:
- EP-B1- 0 940 214
- DE-A1- 19 712 730

## Beschreibung

Die Erfindung betrifft ein Laserschweißverfahren zum Fügen eines Nicht-Sintermaterials mit einem Sintermaterial.

Laserschweißverfahren werden vor allem zum Verschweißen von Bauteilen eingesetzt, die mit hoher Schweißgeschwindigkeit, schmaler und schlanker Schweißnahtform und mit geringem thermischem Verzug gefügt werden müssen. Dieses auch als Laserstrahlschweißen bezeichnete Verfahren wird in der Regel ohne einen Zusatzwerkstoff ausgeführt. Ein großer Vorteil lasergeschweißter Bauteile ist der durch den im Vergleich zu anderen Schweißverfahren geringere, konzentrierte Energieeintrag in das Werkstück.

Problematisch ist allerdings das Fügen kohlenstoffhaltiger Bauteile mittels eines Laserschweißverfahrens. So sind Sintermaterialien, insbesondere solche mit einem erhöhten Kohlenstoffanteil, bisher nicht mittels Laserstrahlschweißen mit einem Nicht-Sintermaterial verschweißbar. Ein Aufbringen bzw. Einkoppeln eines Laserstrahls in das Sintermaterial führt aufgrund dessen Materialbeschaffenheit, sprich Porosität, Kohlenstoffgehalt, unvermeidbarer Verunreinigungen und der eingebrachten Energiedichte des Laserstrahls zu strukturellen Veränderungen bis hin zu lokalen Zerstörungen des Gefüges. Zudem überschreitet der Kohlenstoffindex bei kohlenstoffhaltigen Sinterwerkstoffen häufig den zulässigen Grenz- bzw. Richtwert für einen stabilen Härteverlauf innerhalb der Schweißverbindung zur Vermeidung von Rissen.

Dennoch wird im bekannten Stand der Technik zumindest erwähnt, dass Nicht-Sintermaterialien und Sintermaterialien mittels des Laserschweißverfahrens verbunden bzw. gefügt werden können, ohne dies jedoch im Detail zu beschreiben. Eine konkrete Lösung der angeführten Probleme beim Einkoppeln eines Laserstrahls in ein gesintertes Stahlbauteil ist jedoch nicht bekannt. Als Beispiel seien hier die Druckschriften DE 102004038681 A1, DE 102016220830 A1 und DE 102017119264 B4 genannt. Weiterer Stand der Technik ist in DE 1971230 A1 und EP 0940214 B1 beschrieben.

Aufgabe der Erfindung ist es daher, ein eingangs genanntes Laserschweißverfahren zum Fügen eines Nicht-Sintermaterials mit einem Sintermaterial, sowie einen aus diesem Verfahren resultierenden Verbundkörper und die Verwendung eines Laserschweißverfahrens zum Fügen eines Nicht-Sintermaterials mit einem Sintermaterial bereitzustellen.

Gemäß einem Aspekt wird die Aufgabe durch ein Laserschweißverfahren zum Fügen eines Nicht-Sintermaterials mit einem Sintermaterial gelöst, das folgende Schritte aufweist: Bereitstellen eines ersten Bauteils aus einem Nicht-Sintermaterial, Bereitstellen eines zweiten Bauteils aus einem Sintermaterial, Anordnen des ersten Bauteils und des zweiten Bauteils entlang einer Kontaktebene zum Erzeugen eines Fügestoßes, Aufbringen eines Laserstrahls auf einen ersten Fügebereich des ersten Bauteils im Bereich des Fügestoßes zum Aufschmelzen des ersten Fügebereichs zu einer Schmelze, Aufschmelzen eines zweiten Fügebereichs des zweiten Bauteils im Bereich des Fügestoßes mittels der Schmelze des ersten Fügebereichs, und Abkühlen des Fügestoßes.

Vorteilhafte Ausführungsformen sind in den Unteransprüchen und nebengeordneten Ansprüchen angegeben.

Das Sintermaterial in dem zweiten Fügebereich wird also mittels der Schmelze des Nichtsintermaterials von dem ersten Fügebereich aufgeschmolzen. Der Laserstrahl wird unmittelbar auf einen Randbereich des Nicht-Sintermaterials aufgebracht bzw. in diesen eingekoppelt. Deshalb wird in diesem Zusammenhang von einem indirekten Laserschweißen gesprochen. Das erfindungsgemäße Laserschweißverfahren bringt den Vorteil mit sich, dass auf einfache Weise eine stabile und großserientaugliche Schweißverbindung zwischen einem Nicht-Sintermaterial und einem Sintermaterial erzeugt wird. Insbesondere ist für viele Anwendungsbereiche nun eine Verschweißung anstelle einer Verschraubung möglich. Dies führt zu einer erheblichen Material- und Herstellungskostenreduzierung. Zudem ist das Laserschweißverfahren sehr flexibel für verschiedene Geometrien der zu fügenden Bauteile einsetzbar, was wiederum die Prozess- und/oder Herstellungskosten deutlich reduziert.

Sintermetalle weisen häufig sogenannte Sperrschichten, wie zum Beispiel Martensitstrukturen, auf. Martensit ist ein metastabiles Gefüge, das diffusionslos und athermisch durch eine kooperative Scherbewegung aus einem Ausgangsgefüge, hier dem Sintermaterial, entsteht und zu einer besonders hohen Festigkeit bzw. Härte führt. Eine Sperrschicht wirkt sich somit grundsätzlich positiv auf die Materialeigenschaften eines Sintermetalls bzw. zweiten Bauteils aus, erschwert jedoch ein Fügen bzw. Verbinden mit dem Nicht-Sintermaterial bzw. dem ersten Bauteil. Durch ein Entfernen der Sperrschicht wird das Fügen des Nicht-Sintermaterials und des Sintermaterials erleichtert und beschleunigt

Zum besseren Verständnis sollen an dieser Stelle die Begriffe Kontaktebene, Fügestoß und Fügebereich näher erklärt werden. Mit der Kontaktebene ist eine virtuelle Fläche gemeint, an welche die beiden zu fügenden Bauteile angelegt werden, um miteinander verschweißt werden zu können. Somit sind bei einem Schweißvorgang das erste Bauteil auf der einen Seite und das zweite Bauteil auf der anderen bzw. gegenüberliegenden Seite der Kontaktebene angeordnet. Dabei liegen die beiden Bauteile zumindest abschnittsweise aneinander an. Wie bereits erwähnt, bilden bzw. erzeugen die beiden Bauteile dabei einen Fügestoß. Unter dem Fügestoß ist eine Stoßkante zu verstehen, welche entlang von Außenrandabschnitten der beiden Bauteile verläuft, an denen die Bauteile aneinander anliegen. Dabei kann ein Außenrandabschnitt des einen Bauteils entweder auf einer über dessen Außenrand hinausgehenden Außenfläche des anderen Bauteils aufliegen oder mit einem Außenrandabschnitt des anderen Bauteils bündig abschließen. An dem Fügestoß verlaufen zwei Fügebereiche, genauer der erste Fügebereich des ersten Bauteils und der zweite Fügebereich des zweiten Bauteils. Der Fügebereich ist derjenige Teil bzw. Abschnitt eines Bauteils, der unmittelbar an dem Schweißvorgang beteiligt ist. Bei dem ersten Bauteil aus dem Nicht-Sintermaterial ist es der Teil, welcher bei dem Aufbringen des Laserstrahls in eine Schmelze überführt wird. Bei dem zweiten Bauteil aus dem Sintermaterial ist es der Teil, welcher mittels der Schmelze des ersten Fügebereichs aufgeschmolzen wird, wodurch die beiden Fügebereiche miteinander verschmelzen bzw. verbunden werden.

In einer vorteilhaften Ausführungsform wird der Laserstrahl bei dem Aufbringen parallel zu der Kontaktebene ausgerichtet. Vorzugsweise ist der Laserstrahl dabei auch frontal bzw. stirnseitig auf den ersten Fügebereich des ersten Bauteils gerichtet. Dadurch kann der Laserstrahl seine maximale Wirkung entfalten und eine hohe Eindringtiefe bewirken. Bei dieser Ausrichtung des Laserstrahls kann somit eine maximale Eindringtiefe und eine erhöhte Festigkeit der Schweißnaht erreicht werden Eine derartige Ausrichtung des Laserstrahls eignet sich besonders im Falle eines Fügestoßes, bei dem die Außenrandabschnitte der beiden Bauteile miteinander bündig abschließen. Das Risiko, den Laserstrahl unbeabsichtigt auf das zweite Bauteil aus Sintermaterial aufzubringen, wird somit reduziert.

Gemäß einer bevorzugten Ausführungsform wird der Laserstrahl bei dem Aufbringen in einem Winkel α zu der Kontaktebene ausgerichtet, wobei der Winkel α maximal 45°, insbesondere maximal 30°, insbesondere maximal 15° beträgt. Je größer die Eindringtiefe in den Fügestoß ist, desto größer ist die Festigkeit der Schweißverbindung. Eine Abweichung des Winkels α von 0° kann vorgesehen, zum Beispiel, wenn der erste Fügebereich aufgrund von baulichen Gegebenheiten mit einem zur Kontaktebene parallel ausgerichteten Laserstrahl nicht erreicht werden kann bzw. keine parallel verlaufende Schweißnahtwurzel ausgebildet wird und somit die Eindringtiefe reduziert würde. Bis zu einem Winkel von maximal 45° kann der Laserstrahl jedoch noch eine ausreichende Wirkung entfalten, um den Fügebereich des ersten Bauteils aufzuschmelzen. Eine solche gewinkelte Ausrichtung des Laserstrahls eignet sich besonders dann, wenn der zu fügende Außenrandabschnitt des einen Bauteils auf einer über dessen Außenrand hinausgehenden Außenfläche des anderen Bauteils aufliegt. Somit wird entweder die Gefahr, den Laserstrahl auf das zweite Bauteil aufzubringen, minimiert, oder ein Aufbringen des Laserstrahls auf den ersten Fügebereich überhaupt erst ermöglicht.

In einer weiteren vorteilhaften Ausführungsform erfolgt das Aufbringen des Laserstrahls mittels eines kontinuierlichen oder eines gepulsten Laserstrahls. Dabei hängt es beispielsweise von der Geometrie, aber auch von der Wärmeleitfähigkeit des Nicht-Sintermaterials ab, ob ein kontinuierlicher oder ein gepulster Schweißvorgang von Vorteil ist.

Das kontinuierliche Laserschweißen ist ein unterbrechungsfreier Schweißvorgang und eignet sich besonders zum Schweißen von dicken Bauteilen, sowie für Refraktärmetalle wie Titan, Chrom und Wolfram.

Beim gepulsten Laserschweißen wird die Energiezufuhr in zeitlich begrenzten Abständen ausgesendet. Nach jedem Laserpuls erfolgt eine kurze Pause, in welcher sich die vorher erzeugte Schmelze abkühlen kann. Dieses auch als Feinschweißen bezeichnete Verfahren eignet sich besonders für dünnwandige Werkstücke, wie leichte und dünne Metalle, für die Verbindung von Bauteilen sehr unterschiedlicher Geometrien, sowie für schwer schweißbare Werkstoffe. Es verhindert, dass sich die Bauteile verformen oder stärker als gewünscht schmelzen.

Erfindungsgemäß vorteilhaft erfolgt das Aufbringen mittels Laserstrahl-MSG-Hybrid-Schweißens. Der Laserstrahl-MSG-Hybrid-Prozess bzw. das Laserstrahl-MSG-Hybrid-Schweißen ist die Kombination eines Laserstrahls mit einem MSG-Schweißprozess in einer gemeinsamen Prozesszone (MSG = Metallschutzgasschweißen). Dabei werden die Vorteile beider Verfahren genutzt. Es werden sehr tiefe Einbrände mit einer guten Flankenbindung erzielt. Dabei bildet sich eine sehr schmale Wärmeeinflusszone mit wenig Verzug. Der Prozess erlaubt sehr hohe Schweißgeschwindigkeiten, was zu geringerer Streckenenergie führt. Der Hauptgrund für hohe Wirtschaftlichkeit liegt in einer reduzierten Schweißnahtvorbereitung. Es können ganze Arbeitsschritte entfallen.

In einer bevorzugten Ausführungsform erfolgt das Bereitstellen des ersten Bauteils mittels eines Bauteils aus Stahl und das Bereitstellen des zweiten Bauteils mittels eines Bauteils aus einem kohlenstoffhaltigen Sinterstahl. Das Bereitstellen einer solchen Kombination eignet sich insbesondere für das Herstellen eines - meist als hydraulischen Phasenversteller bzw. Schwenkmotor ausgebildeten - Nockenwellenverstellers. Konkret eignet sich diese Ausführungsform für ein Verschweißen eines Abschlussdeckels aus Stahl mit einem Stator aus einem kohlenstoffhaltigen Sinterstahl. Im Umkehrschluss bringt das Laserschweißverfahren beim Herstellen des Nockenwellenverstellers deutliche Einsparungen von Material und somit von Kosten, insbesondere gegenüber bisher verwendeten Verschraubungen.

Gemäß einer weiteren bevorzugten Ausführungsform erfolgt das Bereitstellen des ersten Bauteils mittels eines kreisscheibenförmigen Bauteils und das Aufbringen des Laserstrahls von radial außen auf den ersten Fügebereich gerichtet und auf einer Kreisbahn parallel zu der Kontaktebene um mindestens eines der Bauteile herumgeführt. Alternativ oder in Kombination ist es aber auch möglich, ein den Laserstrahl bereitstellendes Lasergerät fest zu installieren und die Bauteile so zu drehen, dass die Relativbewegung zwischen dem Laserstrahl und den Bauteilen die gleiche ist, wie beim Herumführen des Laserstrahls bzw. des Lasergeräts auf der Kreisbahn um das mindestens eine Bauteil. Auch diese Variation der Verfahrensschritte eignet sich insbesondere für das Verschweißen eines Abschlussdeckels mit einem Stator beim Herstellen eines Nockenwellverstellers.

Ein Verbundkörper mit einem ersten Bauteil aus einem Nicht-Sintermaterial und einem zweiten Bauteil aus einem Sintermaterial kann gemäß einem Verfahren nach den vorangehenden Ausführungsformen hergestellt werden. Der Verbundkörper bringt ähnliche Vorteile wie das erfindungsgemäße Verfahren mit sich.

Das Sintermaterial des zweiten Fügebereichs wird also mittels der Schmelze des Nichtsintermaterials von dem ersten Fügebereich aufgeschmolzen. Der Laserstrahl wird unmittelbar auf einen Randbereich des Nicht-Sintermaterials aufgebracht bzw. in diesen eingekoppelt. Folglich können auch schwer zu fügende Materialpaarungen miteinander verschweißt werden, welche unterschiedliche Eigenschaften umfassen oder für unterschiedliche Zwecke einsetzbar sind.

Vorzugsweise ist das erste Bauteil kreisscheibenförmig ausgebildet. Somit hat das erste Bauteil beispielsweise die Form des Abschlussdeckels an dem Stator eines Nockenwellverstellers. Eine kreisförmige Ausbildung des ersten Bauteils ermöglicht oder erleichtert ein gleichmäßiges Aufbringen des Laserstrahls von radial außen auf den ersten Fügebereich, während das Lasergerät auf einer Kreisbahn um das erste Bauteil herumgeführt wird.

Ferner ist das erste Bauteil vorzugsweise als ein Deckel, insbesondere als ein Statordeckel an einem Nockenwellenversteller, ausgebildet. Der Statordeckel entspricht dem Abschlussdeckel für den Stator an dem Nockenwellenversteller. Das zweite Bauteil ist bevorzugt als ein Stator, insbesondere als ein Stator eines Nockenwellenverstellers, ausgebildet.

In Verbindung mit diesen beiden Ausführungsformen soll nochmals die besondere Eignung des Laserschweißverfahrens für das Herstellen eines Nockenwellenverstellers hervorgehoben werden. Der Stator des Nockenwellenverstellers ist beispielsweise mit Zähnen für einen Kettentrieb ausgebildet. Um eine zum Tragen einer Kette notwendige Härte zu gewährleisten, ist der Stator vorzugsweise aus einem härtbaren Sintermaterial hergestellt. Eine Laser-Schweißverbindung zwischen diesem Sintermaterial und einem aus einem Nicht-Sintermaterial hergestellten Statordeckel ist mittels des erfindungsgemäßen Laserschweißverfahrens in besonders guter Form möglich. Der Statordeckel hingegen kann muss aus einem leicht schweißbaren Stahl hergestellt sein. Beispielsweise handelt es sich hierbei um ein gestanztes Stahlblech mit einer Dicke kleiner 6 mm oder vorzugsweise kleiner 3 mm.

In einer vorteilhaften Ausführungsform ist das Sintermaterial ein Sintermetall, vorzugsweise ein Sinterstahl. Sintermetall ist bestens geeignet für Bauteile, die mehrere Bearbeitungsprozesse erfordern, komplexe Geometrien aufweisen und/oder mehreren Teilkomponenten in einen neuen Bauteil integrieren, wie es beispielsweise bei dem Stator der Fall ist.

In einer besonders bevorzugten Ausführungsform weist das Sintermetall einen Kohlenstoffanteil, vorzugsweise zwischen 0,3 und 0,9 Prozent, insbesondere zwischen 0,5 und 0,8 Prozent, insbesondere 0,6 Prozent, auf. Mit zunehmendem Kohlenstoffgehalt lässt sich Stahl und insbesondere Sinterstahl besser härten. Gleichzeitig ist für das Laserschweißverfahren ein Material mit möglichst geringem Kohlenstoffgehalt am besten geeignet, um Materialeigenspannungen zu reduzieren. Ein entsprechendes Optimum besteht bei 0,6 Prozent Kohlenstoffanteil, um ein ausreichend härtbares Material bereitzustellen, welches aber auch für das erfindungsgemäße Laserschweißverfahren verwendbar ist. Ferner ist das Nicht-Sintermaterial bevorzugt ein Metall, vorzugsweise ein Stahl. Ein solches Nicht-Sintermaterial ist stabil und besonders gut mittels Laserschweißen bearbeitbar und/oder fügbar.

Erfindungsgemäß vorteilhaft weist auch das Nicht-Sintermaterial einen möglichst geringem Kohlenstoffgehalt, insbesondere einem Kohlenstoffgehalt von maximal 0,2 Prozent, und somit eine reduzierte Materialeigenspannung auf. Beispielsweise umfasst der Stahl einen Kohlenstoffgehalt von etwa 0,02 Prozent und einen Mangangehalt von etwa 0,2 Prozent. Dies gewährleistet eine gute Schweißbarkeit.

Ein nicht zur Erfindung gehörender Aspekt ist eine Verwendung eines Laserschweißverfahrens zum Fügen eines Nicht-Sintermaterials mit einem Sintermaterial Dabei wird ein Laserstrahl auf einen ersten Fügebereich des Nicht-Sintermaterials im Bereich eines Fügestoßes zum Aufschmelzen des ersten Fügebereichs zu einer Schmelze aufgebracht, und ein zweiter Fügebereich des zweiten Bauteils im Bereich des Fügestoßes mittels der Schmelze des ersten Fügebereichs aufgeschmolzen. Die Verwendung des Laserschweißverfahrens und der folgenden Ausführungsformen zur Verwendung dieses Verfahrens bringen ähnliche Vorteile wie das erfindungsgemäße Laserschweißerfahren und/oder der hier beschriebene Verbundkörper mit sich.

Das Sintermaterial in dem zweiten Fügebereich wird mittels der Schmelze des Nicht-Sintermaterials des ersten Fügebereichs aufgeschmolzen. Der Laserstrahl wird hierfür unmittelbar auf einen Randbereich des Nicht-Sintermaterials aufgebracht bzw. in diesen eingekoppelt. Deshalb wird in diesem Zusammenhang von einem indirekten Laserschweißen gesprochen. Die Verwendung des Laserschweißverfahrens bringt den Vorteil mit sich, dass auf einfache Weise eine stabile und großserientaugliche Schweißverbindung zwischen einem Nicht-Sintermaterial und einem Sintermaterial erzeugt wird.

Insbesondere ist für viele Anwendungsbereiche nun eine Verschweißung anstelle einer Verschraubung möglich. Dies führt zu einer erheblichen Material- und Herstellungskostenreduzierung. Zudem ist das Laserschweißverfahren sehr flexibel für verschiedene Geometrien der zu fügenden Bauteile einsetzbar, was wiederum die Prozess- und/oder Herstellungskosten deutlich reduziert. Der Laserstrahl wird unmittelbar auf einen Randbereich des Nicht-Sintermaterials aufgebracht bzw. in diesen eingekoppelt. Die Verwendung des Laserschweißverfahren ermöglicht eine Schweißverbindung zwischen einem Nicht-Sintermaterial und einem Sintermaterial. Folglich können auch schwer zu fügende Materialpaarungen miteinander verschweißt werden, welche unterschiedliche Eigenschaften umfassen oder für unterschiedliche Zwecke einsetzbar sind.

Nach einer bevorzugen Ausführungsform werden das erste Bauteil und das zweite Bauteil entlang einer Kontaktebene zum Erzeugen eines Fügestoßes angeordnet. Bei der Verwendung des Laserschweißverfahrens wird der Laserstrahl parallel zu der Kontaktebene ausgerichtet. Dadurch kann der Laserstrahl seine maximale Wirkung entfalten und eine hohe Eindringtiefe bewirken. Bei dieser Ausrichtung des Laserstrahls kann somit eine maximale Eindringtiefe sowie Festigkeit der Schweißnaht erreicht werden. Eine derartige Ausrichtung des Laserstrahls eignet sich besonders im Falle eines Fügestoßes, bei dem die Außenrandabschnitte der beiden Bauteile miteinander bündig abschließen. Das Risiko, den Laserstrahl unbeabsichtigt auf das zweite Bauteil aus Sintermaterial aufzubringen, ist somit reduziert.

In einer alternativen Ausführungsform wird bei der Verwendung des Laserschweißverfahrens ein Laserstrahl in einem Winkel α zu der Kontaktebene ausgerichtet, wobei der Winkel α maximal 45°, insbesondere maximal 30°, insbesondere maximal 15° beträgt. Eine Abweichung des Winkels α von 0° kann vorgesehen werden, zum Beispiel, wenn der erste Fügebereich aufgrund von baulichen Gegebenheiten mit einem zur Kontaktebene parallel ausgerichteten Laserstrahl nicht erreicht werden kann bzw. keine parallel verlaufende Schweißnahtwurzel ausgebildet wird und somit die Eindringtiefe reduziert würde. Bis zu einem Winkel von maximal 45° kann der Laserstrahl jedoch noch eine ausreichende Wirkung entfalten, um den Fügebereich des ersten Bauteils aufzuschmelzen. Eine solche gewinkelte Ausrichtung des Laserstrahls eignet sich besonders dann, wenn der zu fügende Außenrandabschnitt des einen Bauteils auf einer über dessen Außenrand hinausgehenden Außenfläche des anderen Bauteils aufliegt. Somit wird entweder die Gefahr, den Laserstrahl auf das zweite Bauteil aufzubringen, minimiert, oder ein Aufbringen des Laserstrahls auf den ersten Fügebereich überhaupt erst ermöglicht.

In einer weiteren vorteilhaften Ausführungsform wird bei der Verwendung des Laserschweißverfahrens ein kontinuierliches und/oder gepulstes Laserschweißen eingesetzt.

Dabei hängt es beispielsweise von der Geometrie, aber auch von der Wärmeleitfähigkeit des Nicht-Sintermaterials ab, ob ein kontinuierlicher oder ein gepulster Schweißvorgang von Vorteil ist. Das kontinuierliche Laserschweißen ist ein unterbrechungsfreier Schweißvorgang und eignet sich besonders zum Schweißen von dicken Bauteilen, sowie für Refraktärmetalle wie Titan, Chrom und Wolfram. Beim gepulsten Laserschweißen wird hingegen die Energiezufuhr in zeitlich begrenzten Abständen ausgesendet. Nach jedem Laserpuls erfolgt eine kurze Pause, in welcher sich die vorher erzeugte Schmelze abkühlen kann. Das verhindert, dass sich die Bauteile verformen oder stärker als gewünscht schmelzen.

Vorteilhaft wird bei der Verwendung des Laserschweißverfahrens ein Laserstrahl-MSG-Hybrid-Schweißen eingesetzt. Der Laserstrahl-M SG-Hybrid-Prozess bzw. das Laserstrahl-MSG-Hybrid-Schweißen ist die Kombination eines Laserstrahls mit einem MSG-Schweißprozess in einer gemeinsamen Prozesszone (MSG = Metallschutzgasschweißen). Dabei werden die Vorteile beider Verfahren genutzt. Es werden sehr tiefe Einbrände mit einer guten Flankenbindung erzielt. Dabei bildet sich eine sehr schmale Wärmeeinflusszone mit wenig Verzug. Der Prozess erlaubt sehr hohe Schweißgeschwindigkeiten, was zu geringerer Streckenenergie führt. Der Hauptgrund für hohe Wirtschaftlichkeit liegt in einer reduzierten Schweißnahtvorbereitung. Es können ganze Arbeitsschritte entfallen.

Weitere Vorteile der Erfindung gehen aus der Beschreibung und den Zeichnungen hervor.

Die Erfindung ist nachfolgend anhand der in den Zeichnungen dargestellten Ausführungsbeispielen näher erläutert. Es zeigen:
Fig. 1 einen Querschnitt einer ersten Ausführungsform eines mit dem erfindungsgemäßen Verfahren hergestellten Verbundkörpers vor dem Aufbringen eines Laserstrahls;
Fig. 2 einen Querschnitt des Verbundkörpers aus Fig. 1 während des Aufbringens eines Laserstrahls;
Fig. 3 eine perspektivische Darstellung einer zweiten Ausführungsform eines mit dem erfindungsgemäßen Verfahren hergestellten Verbundkörpers während des Aufbringens eines Laserstrahls; und
Fig. 4 ein Ablaufdiagramm des erfindungsgemäßen Verfahrens.

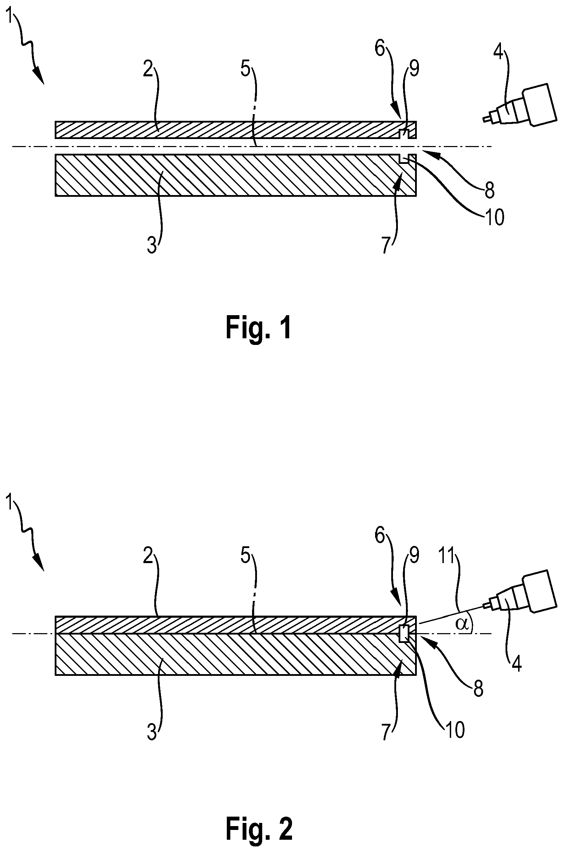

Die Fig. 1 zeigt einen Querschnitt einer ersten Ausführungsform eines erfindungsgemäßen Verbundkörpers 1 vor dem Aufbringen eines Laserstrahls 11. Der Verbundkörper 1 befindet sich in einer frühen Phase eines erfindungsgemäßen Verfahrens zu seiner Herstellung bzw. eines erfindungsgemäßen Laserschweißverfahrens zum Fügen eines Nicht-Sintermaterials und eines Sintermaterials. Das erste Bauteil 2 besteht aus einem Nicht-Sintermaterial und das zweite Bauteil 3 besteht aus einem Sintermaterial. Zudem zeigt Fig. 1 ein Lasergerät 4, welches auf das erste Bauteil 2 gerichtet angeordnet ist. Die Bauteile 2, 3 befinden sich auf gegenüberliegenden Seiten einer Kontaktebene 5, entlang welcher sie angeordnet und somit aneinander angelegt werden. Das erste Bauteil 2 weist einen ersten Fügebereich 6 auf. Das zweie Bauteil 3 weist einen zweiten Fügebereich 7 auf.

Die Fügebereiche 6, 7 sind jeweils an den dem Lasergerät 4 zugewandten Enden der Bauteile 2, 3 angeordnet. Die Bauteile 2, 3 werden entlang der Kontaktebene 5 angeordnet und mittels der Fügebereiche 6, 7 wird ein Fügestoß 8 erzeugt. Dabei ist der Fügestoß 8 entlang einer Stoßkante angeordnet. Die Stoßkante verläuft dort, wo die Bauteile 2, 3 auf der Kontaktebene 5 bündig miteinander abschließen. Die Fügebereiche 6, 7 können des Weiteren jeweils eine Nut 9, 10 aufweisen. Konkret weist im gezeigten Ausführungsbeispiel der erste Fügebereich 6 eine erste Nut 9 und der zweite Fügebereich 7 eine zweite Nut 10 auf. Die Nuten 9, 10 sind einander gegenüberliegend angeordnet und definieren eine gemeinsame Kavität. Auf die Funktionen der Nuten 9, 10 wird in der nun folgenden Beschreibung zu Fig. 2 eingegangen.

Die Fig. 2 zeigt einen Querschnitt des erfindungsgemäßen Verbundkörpers 1 aus Fig. 1 während des Aufbringens eines Laserstrahls 11. Im Vergleich zur Fig. 1 ist der Verbundkörper 1 in einer fortgeschrittenen Phase des Verfahrens zu seiner Herstellung dargestellt. Wie in Fig. 1 sind auch hier die Bauteile 2,3 mit ihren Fügebereichen 6, 7 und Nuten 9, 10 zu sehen. Des Weiteren sind auch in Fig. 2 wieder das Lasergerät 4 und die Kontaktebene 5 dargestellt. Allerdings sind die Bauteile 2, 3 nun an der Kontaktfläche 5 angeordnet und liegen somit unmittelbar aneinander an, wodurch der Fügestoß 8 erzeugt wird. Zudem ist in dieser Phase des Verfahrens das Lasergerät 4 aktiviert, dargestellt mit einem auf das erste Bauteil 2 bzw. dessen Fügebereich 6 gerichteten Laserstrahls 11. Konkret ist hier der Verfahrensschritt des Aufbringens des Laserstrahls 11 auf den ersten Fügebereich 6 des ersten Bauteils 2 im Bereich des Fügestoßes 8 zum Aufschmelzen des ersten Fügebereichs 6 zu einer Schmelze dargestellt. Ein darauffolgender bzw. daraus resultierender Verfahrensschritt ist das Aufschmelzen des zweiten Fügebereichs 7 des zweiten Bauteils 3 im Bereich des Fügestoßes 8 mittels der Schmelze des ersten Fügebereichs 6. Es entsteht eine im Wesentlichen umlaufende Schweißnaht.

Die Nuten 9, 10 sind in das jeweilige Bauteil 2, 3 eingelassen, und an der gemeinsamen Kontaktebene 5 sowie zumindest teilweise parallel zum Fügestoß 8 angeordnet. Da sich die beiden Nuten 9, 10 an der Kontaktebene 5 direkt gegenüberliegen, bilden sie eine gemeinsame Kavität. Die Belastung der Schweißnaht kann reduziert werden, da im Betrieb des Verbundkörpers 1 Druck von der Schweißnahtwurzel ferngehalten und in das umliegende Grundmaterial abgeleitet werden kann.

Ebenso ist es möglich, eine in das erste und/oder das zweite Bauteil eingelassene zumindest teilweise parallel zum Fügestoß verlaufende erste bzw. zweite Nut 9, 10 zum Gasdruckausgleich vorzusehen. Dadurch kann beispielsweise der Vorteil erreicht werden, dass die Schmelze weniger durch die Diffusion von entstehenden Gasen beeinflusst wird, wodurch die Festigkeit zusätzlich vergrößert bzw. stabilisiert werden kann. Des Weiteren kann durch das Einfließen der Schmelze in die Nut eine verbesserte Scherfestigkeit der Fügeverbindung bereitgestellt werden. Darüber hinaus können Spannungen beim Fügeprozess deutlich reduziert werden, wodurch die Güte der Schweißverbindung zusätzlich verbessert wird.

Im Übrigen kann auch nur eine der Nuten 9, 10 vorgesehen sein, also entweder nur die erste Nut 9 oder nur die zweite Nut 10. Auch das Fügen der Bauteile 2,3 ohne jegliche Nut ist Bestandteil der Erfindung.

Der Laserstrahl 11 wird beim Aufbringen auf den ersten Fügebereich 6 in einem Winkel α zu der Kontaktebene 5 ausgerichtet. Der Winkel α beträgt hier konkret 15°. Optimaler Weise wird der Laserstrahl 11 parallel zur Kontaktebene 5 bzw. mit α = 0° ausgerichtet, da der Laserstrahl 11 dann seine maximale Wirkung und Tiefenwirkung entfalten kann. Der Winkel α kann aber bis zu 45° betragen, um eine noch ausreichende Wirkung des Laserstrahls 11 zu erzielen. Grundsätzlich sind dreidimensionale Spannungs- und Wärmeableitungszustände dabei zu vermeiden.

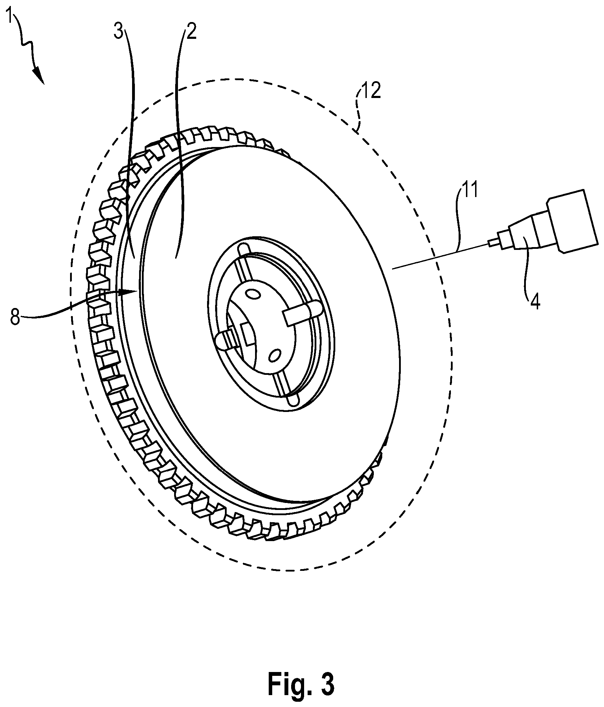

Die Fig. 3 zeigt eine perspektivische Darstellung einer zweiten Ausführungsform des erfindungsgemäßen Verbundkörpers 1 während des Aufbringens eines Laserstrahls 11. Der Verbundkörper 1 ist in dieser zweiten Ausführungsform, als Teil eines Nockenwellenverstellers dargestellt. Dabei ist der Verbundkörper in der - in Fig. 2 veranschaulichten - fortgeschrittenen Phase des Verfahrens zu seiner Herstellung dargestellt. Wie in Fig. 2 sind das erste Bauteil 2 und das zweite Bauteil 3 zu sehen, welche entlang des Fügestoßes 8 aneinander anliegen. Das erste Bauteil 2 ist als ein kreisscheibenförmiger Statordeckel ausgebildet und aus einem Stahl mit einem geringen Kohlenstoffanteil hergestellt. Das zweite Bauteil 3 ist als ein Stator des Nockenwellenverstellers ausgebildet und aus einem Sinterstahl mit einem Kohlenstoffanteil von 0,6 Prozent hergestellt. Der gewählte Kohlenstoffanteil von 0,6 Prozent gewährleistet eine ausreichende Härtbarkeit des Sinterstahls des zweiten Bauteils 3, ermöglicht aber gleichzeitig noch ein Fügen der Bauteile 2, 3 mittels des erfindungsgemäßen Laserschweißverfahrens.

Außerdem ist auch hier in Fig. 3 wieder das Lasergerät 4 mit dem Laserstrahl 11 dargestellt. Bei dem Aufbringen des Laserstrahls 11 werden in dieser Ausführungsform der Laserstrahl 11, und somit auch das Lasergerät 4, auf einer Kreisbahn 12 um das erste Bauteil 2 bzw. den Statordeckel herumgeführt. Dabei wird der Laserstrahl 11 von radial außen auf das erste Bauteil 2 gerichtet bzw. auf dieses aufgebracht.

Die Erfindung ist allerdings nicht auf eine kreisförmige Schweißnaht beschränkt. So kann das erste Bauteil 2 eine von der Kreisform abweichende Form aufweisen, um u.a. ein Aufblähen des Bauteils 2 zu verhindern. Beispielsweise kann das Bauteil 2 kleeblattförmig ausgebildet sein, so dass die umlaufende Schweißnaht auf mehreren Radien sowie teilweise radial verläuft. Ebenso ist es denkbar, dass mehrere umlaufende Schweißnähte vorgesehen sind, welche getrennt voneinander verlaufen.

Zur Vereinfachung wurde in Fig. 3 auf die Darstellung einiger Details (wie beispielsweise Kontaktebene und Fügebereiche) verzichtet. Es gelten aber auch hier die entsprechenden Ausführungen zu den Figuren 1 und 2.

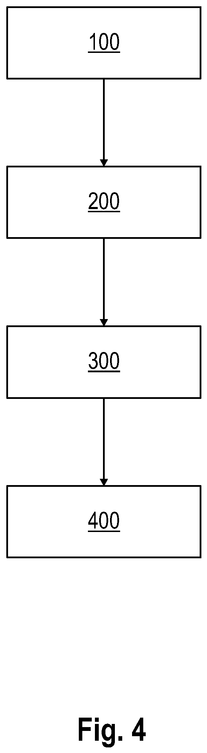

Die Fig. 4 zeigt ein Ablaufdiagramm des erfindungsgemäßen Verfahrens. Das Verfahren umfasst nach dem Bereitstellen eines ersten Bauteils 2 aus einem Nicht-Sintermaterial und dem Bereitstellen eines zweiten Bauteils 3 aus einem Sintermaterial den ersten Schritt des Anordnens 100 des ersten Bauteils 2 und des zweiten Bauteils 3 entlang einer Kontaktebene 5 zum Erzeugen eines Fügestoßes 8. In einem zweiten Schritt umfasst das Verfahren das Aufbringen 200 eines Laserstrahls 11 auf einen ersten Fügebereich 6 des ersten Bauteils 2 im Bereich des Fügestoßes 8 zum Aufschmelzen des ersten Fügebereichs 6 zu einer Schmelze. Im nachfolgenden Verfahrensschritt erfolgt das Aufschmelzen 300 eines zweiten Fügebereichs 7 des zweiten Bauteils 3 im Bereich des Fügestoßes 8 mittels der Schmelze des ersten Fügebereichs 6, und im letzten Schritt erfolgt das Abkühlen 400 des Fügestoßes 8.

## Patentansprüche

1. Laserschweißverfahren zum Fügen eines Nicht-Sintermaterials mit einem Sintermaterial, das folgende Schritte aufweist:
- Bereitstellen eines ersten Bauteils (2) aus einem Nicht-Sintermaterial, Bereitstellen eines zweiten Bauteils (3) aus einem Sintermaterial,
- Anordnen (100) des ersten Bauteils (2) und des zweiten Bauteils (3) entlang einer Kontaktebene (5) zum Erzeugen eines Fügestoßes (8),
- Aufbringen (200) eines Laserstrahls (11) auf einen ersten Fügebereich (6) des ersten Bauteils (2) im Bereich des Fügestoßes (8) zum Aufschmelzen des ersten Fügebereichs (6) zu einer Schmelze, und
- Abkühlen (400) des Fügestoßes (8),
**gekennzeichnet durch**
- Aufschmelzen (300) eines zweiten Fügebereichs (7) des zweiten Bauteils (3) im Bereich des Fügestoßes (8) mittels der Schmelze des ersten Fügebereichs (6).

2. Verfahren nach Anspruch 1, **dadurch gekennzeichnet, dass** der Laserstrahl (11) bei dem Aufbringen parallel zu der Kontaktebene (5) ausgerichtet wird.

3. Verfahren nach Anspruch 1, **dadurch gekennzeichnet, dass** der Laserstrahl (11) bei dem Aufbringen in einem Winkel a zu der Kontaktebene (5) ausgerichtet wird, wobei der Winkel a maximal 45°, insbesondere maximal 30°, insbesondere maximal 15° beträgt.

4. Verfahren nach einem der vorangehenden Ansprüche, **dadurch gekennzeichnet, dass** das Aufbringen des Laserstrahls (11) mittels eines kontinuierlichen oder eines gepulsten Laserstrahls (11) erfolgt.

5. Verfahren nach einem der vorangehenden Ansprüche, **dadurch gekennzeichnet, dass** das Aufbringen mittels eines Laserstrahl-MSG-Hybrid-Schweißens erfolgt.

6. Verfahren nach einem der vorangehenden Ansprüche, **dadurch gekennzeichnet, dass** das Bereitstellen des ersten Bauteils (2) mittels eines Bauteils aus Stahl und das Bereitstellen des zweiten Bauteils (3) mittels eines Bauteils aus einem kohlenstoffhaltigen Sinterstahl erfolgt.

7. Verfahren nach einem der vorangehenden Ansprüche, **dadurch gekennzeichnet, dass** das Bereitstellen des ersten Bauteils (2) mittels eines kreisscheibenförmigen Bauteils erfolgt, und das Aufbringen des Laserstrahls (11) von radial außen auf den ersten Fügebereich (6) gerichtet und auf einer Kreisbahn (12) parallel zu der Kontaktebene (5) um mindestens eines der Bauteile (2, 3) herumgeführt erfolgt.

## Claims

1. Laser welding method for joining a non-sintered material with a sintered material, comprising the following steps:
- providing a first component (2) made of a non-sintered material, providing a second component (3) made of a sintered material,
- arranging (100) the first component (2) and the second component (3) along a contact plane (5) to create a joint (8),
- applying (200) a laser beam (11) to a first joining region (6) of the first component (2) in the region of the joint (8) in order to melt the first joining region (6) into a molten mass, and
- cooling (400) the joint (8),
**characterized by**
- melting (300) a second joining region (7) of the second component (3) in the region of the joint (8) by means of the molten mass of the first joining region (6).

2. The method according to claim 1, **characterized in that** the laser beam (11) is aligned parallely to the contact plane (5) during application.

3. The method according to claim 1, **characterized in that** the laser beam (11) is aligned at an angle a to the contact plane (5) during application, wherein the angle a is at most 45°, in particular at most 30°, in particular at most 15°.

4. The method according to one of the preceding claims, **characterized in that** the laser beam (11) is applied by means of a continuous or a pulsed laser beam (11).

5. The method according to one of the preceding claims, **characterized in that** the application is carried out by means of laser beam MSG hybrid welding.

6. The method according to one of the preceding claims, **characterized in that** the first component (2) is provided by means of a component made of steel and the second component (3) is provided by means of a component made of a carbon-containing sintered steel.

7. The method according to one of the preceding claims, **characterized in that** the first component (2) is provided by means of a component in the form of a circular disk, and the application of the laser beam (11) is carried out radially from outside onto the first joining region (6) and guided on a circular path (12) parallel to the contact plane (5) around at least one of the components (2, 3).

## Revendications

1. Procédé de soudage au laser pour assembler un matériau non fritté avec un matériau fritté, comprenant les étapes suivantes:
- mise à disposition d'un premier composant (2) constitué d'un matériau non fritté, mise à disposition d'un deuxième composant (3) constitué d'un matériau fritté,
- disposition (100) du premier composant (2) et du deuxième composant (3) le long d'un plan de contact (5) pour générer un joint d'assemblage (8),
- application (200) d'un rayon laser (11) sur une première zone d'assemblage (6) du premier composant (2) dans la zone du joint d'assemblage (8) afin de faire fondre la première zone d'assemblage (6) en une masse fondue, et
- refroidissement (400) du joint d'assemblage (8),
**caractérisé par**
- la fusion (300) d'une deuxième zone d'assemblage (7) du deuxième composant (3) dans la zone du joint d'assemblage (8) au moyen de la masse fondue de la première zone d'assemblage (6).

2. Procédé selon la revendication 1, **caractérisé en ce que** le rayon laser (11) est orienté de manière parallèle au plan de contact (5) au cours de l'application.

3. Procédé selon la revendication 1, **caractérisé en ce que** le rayon laser (11) est orienté selon un angle a par rapport au plan de contact (5) au cours de l'application, l'angle a étant au maximum de 45°, en particulier au maximum de 30°, en particulier au maximum de 15°.

4. Procédé selon l'une des revendications précédentes, **caractérisé en ce que** l'application du rayon laser (11) a lieu au moyen d'un rayon laser (11) continu ou pulsé.

5. Procédé selon l'une des revendications précédentes, **caractérisé en ce que** l'application a lieu au moyen d'un soudage hybride par faisceau laser MSG.

6. Procédé selon l'une des revendications précédentes, **caractérisé en ce que** la mise à disposition du premier composant (2) a lieu au moyen d'un composant constitué d'acier et la mise à disposition du deuxième composant (3) a lieu au moyen d'un composant constitué d'un acier fritté contenant du carbone.

7. Procédé selon l'une des revendications précédentes, **caractérisé en ce que** la mise à disposition du premier composant (2) est effectuée au moyen d'un composant en forme de disque circulaire, et l'application du rayon laser (11) est effectuée radialement de l'extérieur sur la première zone d'assemblage (6) et de manière guidée sur une trajectoire circulaire (12) parallèle au plan de contact (5) autour d'au moins l'un des composants (2, 3).
